# FASCICULE DE BREVET EUROPEEN

(11) **EP 3 237 143 B1**
(45) Date de publication et mention de la délivrance du brevet: **12.08.2020**
(21) Numéro de dépôt: 15823692.7
(22) Date de dépôt: 18.12.2015
(51) Int. Cl.: B23K 26/34, B23P 6/00, F01D 5/00

(54) **PROCEDE DE FABRICATION PAR LASER D'UNE PIECE DE TURBOMACHINE**
VERFAHREN ZUR HERSTELLUNG EINES TURBOMASCHINENTEILES
METHOD OF MANUFACTURING A TURBINE COMPONENT

(30) Priorité: 23.12.2014 FR 1463266
(43) Date de publication de la demande: 01.11.2017
(73) Titulaire: Safran Aircraft Engines, 75015 Paris (FR)
(72) Inventeur: MOTTIN, Jean-Baptiste, 77550 Moissy-Cramayel (FR)
(74) Mandataire: Ernest Gutmann - Yves Plasseraud S.A.S.
(86) Numéro de dépôt international: PCT/FR2015/053658
(87) Numéro de publication internationale: WO 2016/102858

(56) Documents cités:
- US-A1- 2008 314 878

## Description

La présente invention concerne un procédé de fabrication ou de réparation d'une pièce de turbomachine par l'intermédiaire d'un faisceau laser.

Dans un tel procédé, aussi connu sous la dénomination « Laser Metal Déposition » (dépôt métallique par voie laser), une buse projette une poudre métallique vers un substrat de sorte à réaliser la pièce par dépôts successifs, les uns sur les autres, de couches ou cordons, suivant une direction de dépôt (voir le document US-A-2008/0314878). La poudre considérée, qui est typiquement un mélange de poudres métalliques, est fondue par le faisceau Laser. L'épaisseur de chaque cordon est typiquement comprise entre 0.05mm et 1mm. Une faible épaisseur est en effet à privilégier si l'on souhaite optimiser l'état de surface.

Ce procédé permet la fabrication de pièces de grandes dimensions, notamment en hauteur (axe Z dans un repère orthonormé X,Y,Z). Il est cependant difficile d'obtenir une garantie dimensionnelle finale de la pièce (ou partie de pièce) ainsi fabriquée.

Une variation sur le débit de poudre, la vitesse de rechargement de la buse de projection, la puissance du laser ou la température de la pièce peuvent générer des variations dimensionnelles, en particulier une variation de la hauteur des couches déposées. Localement, cette fluctuation peut n'avoir que peu d'impact ; en revanche elle peut s'amplifier au fur et à mesure des couches déposées jusqu'à conduire à un dépôt instable se traduisant par la création d'un dépôt semblable à des dents de scies.

Un objectif est ici de proposer une solution à tout ou partie des inconvénients qui précèdent.

A cette fin, l'invention propose le procédé de fabrication ou de réparation par 30 projection de poudre métallique sous faisceau laser défini à la revendication 1.

En venant recaler dans le temps le programme initial de fabrication par une ou plusieurs modifications de la trajectoire initialement définie de la buse, il va être possible de bien mieux s'approcher des caractéristiques dimensionnelles finales attendues de la pièce.

On peut aussi attendre un meilleur état de surface, sans dents de scies aussi marquées qu'antérieurement.

En influant donc sur un/des paramètres géométriques, cette solution évite en outre d'avoir à modifier des paramètres de procédés : puissance du laser, vitesse de rechargement entre deux dépôts successifs de couches, débit de poudre, ....

Afin de tendre vers une garantie que la hauteur de matière ainsi déposée corresponde à celle souhaitée, le test de régulation mis en place selon l'invention prévoit :
- qu'initialement la définition de la trajectoire prédéterminée de la buse inclue une définition de ladite trajectoire suivant un axe Z, qui correspond à ladite direction de dépôt des couches et à une hauteur de la pièce,
- que la distance réelle soit mesurée suivant ledit axe Z,
- et que la trajectoire de la buse soit modifiée suivant cet axe Z.

Lors de la mise en œuvre de ce qui précède, il s'est avéré qu'il pouvait être plus performant de ne pas jouer sur la distance entre la buse et le sommet de la couche située en face, mais plutôt, de façon différente :
- de réaliser la pièce en éloignant par étapes successives, suivant ladite direction de dépôt des couches, la buse vis-à-vis du substrat (et donc, dès la deuxième couche, de la couche précédemment déposée),
- et, la trajectoire prédéterminée de la buse incluant un nombre prédéterminé de telles étapes, de modifier la trajectoire de la buse en modifiant ledit nombre prédéterminé d'étapes.

De manière comparable, il est d'ailleurs proposé :
- qu'à la trajectoire prédéterminée de la buse corresponde (dans le programme de la machine) un nombre prédéterminé de dites couches à déposer,
- qu'à la trajectoire modifiée de la buse corresponde un nombre modifié de dites couches encore à déposer,
- et qu'on modifie la trajectoire de la buse en substituant audit nombre prédéterminé de couches à déposer le nombre modifié de couches encore à déposer.

Jouer ainsi dans le temps sur le nombre d'étapes de dépôts de couches successives encore à réaliser et/ou sur le nombre de couches encore à déposer sera a priori plus aisé et sûr à mettre en œuvre et à contrôler que de faire varier l'épaisseur de ces couches, en cours de fabrication.

En relation avec cela, il est d'ailleurs proposé par ailleurs :
- de réaliser la pièce par dépôts successifs de couches d'une même épaisseur, en éloignant à chaque couche la buse vis-à-vis du substrat, ladite direction de dépôt des couches,
- et/ou :
   -- qu'à la distance de référence théorique corresponde, suivant ladite direction de dépôt des couches, une distance déterminée entre le substrat et une extrémité de la buse faisant face audit substrat,
   -- et que cette distance déterminée soit maintenue pendant la réalisation de la pièce, au début ou à la fin du dépôt de chaque couche.

Maintenir dans le temps cette « distance déterminée » et/ou des conditions de dépôt visant à déposer des couches superposées toutes d'une même épaisseur favorisera la stabilité de la solution.

Une performance de la solution passe aussi par l'atteinte d'une rapidité de fabrication. En outre, il s'est avéré qu'il fallait attendre un certain temps pour que les incertitudes de précisions des mesures soient suffisamment faibles.

C'est dans ce cadre qu'il est proposé que, pendant la réalisation de la pièce, ce ne soit qu'après le dépôt de plusieurs couches que :
- ladite distance réelle soit mesurée,
- et/ou la trajectoire modifiée, si ledit écart est atteint.

De façon préférée, il est même conseillé, pendant la réalisation de la pièce :
- d'effectuer plusieurs mesures successives de ladite distance réelle,
- et, si ledit écart est atteint, de ne modifier la trajectoire de la buse qu'après le dépôt de plusieurs couches par rapport à la mesure précédente.

Un autre problème à régler a été de définir les moyens/la manière d'obtenir les données de distance précitées.

Une solution par mesure via une caméra à autofocus a été préférée.

Ainsi, il est proposé d'utiliser un appareil photographique disposant d'un système de mise au point automatique pour obtenir la distance de référence théorique et la distance réelle.

Encore un autre problème corollaire à régler a été celui de parvenir à des mesures régulières en fiabilité, qui ne dépendent pas des conditions de création du bain de fusion sur la pièce en train d'être réalisée, en face, dans l'axe du laser.

En particulier dans le cas où le faisceau laser est émis suivant ledit axe Z, il a ainsi été préféré que les distances de référence théorique et réelle soient mesurées à l'écart dudit axe Z, parallèlement à cet axe ou suivant un angle ayant une projection parallèle audit axe Z.

Ainsi, on évitera justement que la caméra vise le bain de fusion.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 schématise une extrémité de buse de projection de poudre, dans une machine de fusion sélective de poudre de type « Laser Metal Déposition » (dépôt métallique par voie laser),
- les figures 2,3,4, schématisent une telle buse de projection alors pourvue de moyens de mesure de la distance de référence théorique et de la distance réelle en cours de fabrication de la pièce, respectivement en début (figure 1) puis en cours de fabrication,
- la figure 5 est un schéma synoptique du processus de contrôle de l'invention visant à sécuriser l'obtention (d'au moins certaines) des caractéristiques dimensionnelles finales attendues de la pièce, et
- la figure 6 schématise une pièce obtenue par cette technique.

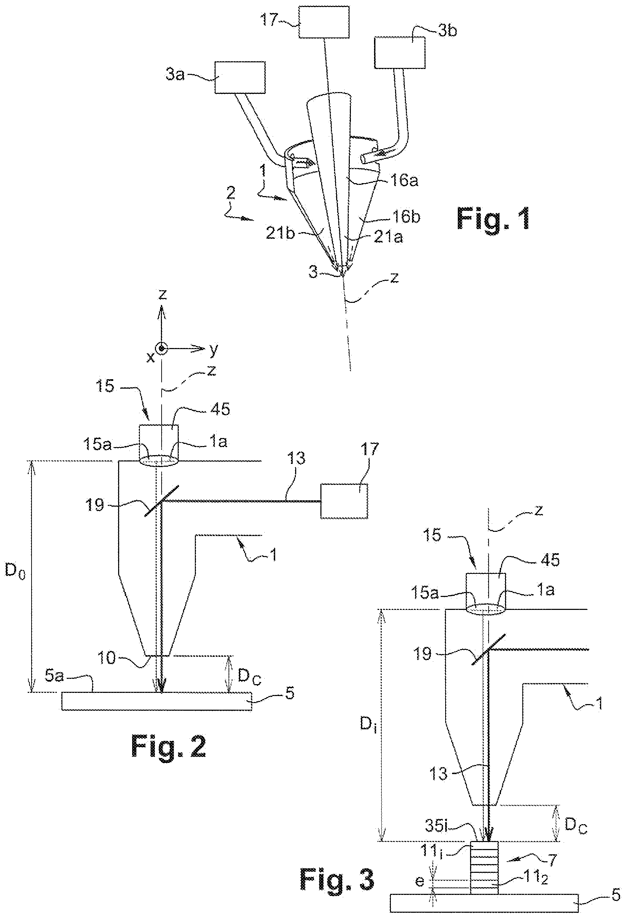

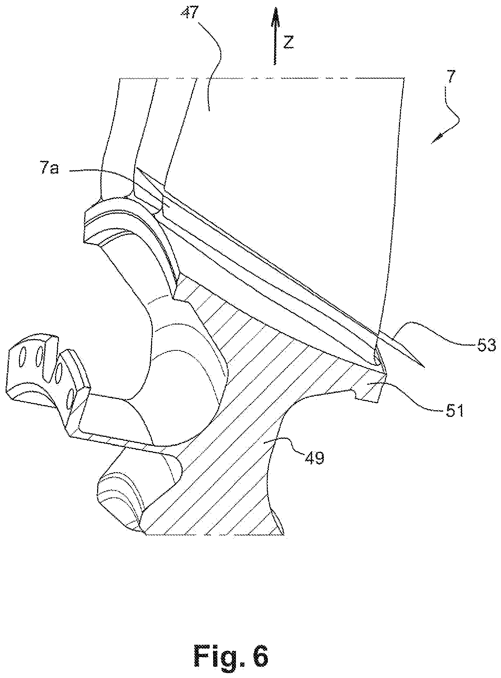

La figure 1 montre une buse 1 connue d'une machine 2 de dépôt métallique par voie laser. La buse projette un mélange 3 de poudres métalliques 3a,3b vers un substrat 5 (figures 2-4), de sorte à réaliser une pièce repérée 7 figure 6.

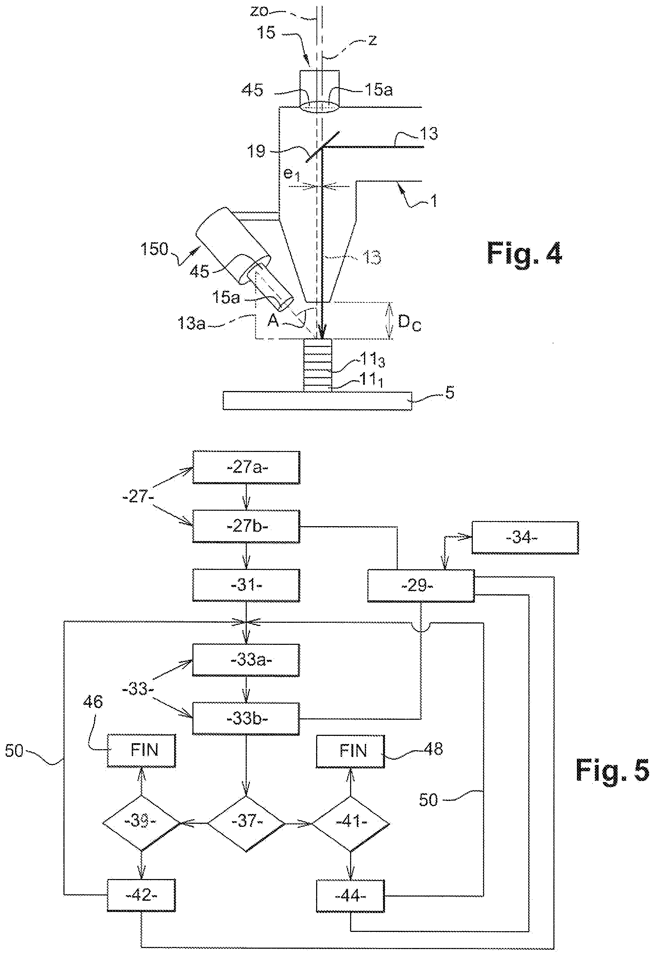

Le substrat 5 est un support, conventionnel dans le domaine, adapté à ce que des couches successives 11₁,11₂,11₃...11ⱼ... de matière issue de la projection soient déposées sur lui (figures 3,4), en liaison avec l'émission vers ce substrat d'un faisceau laser 13. La poudre ou le mélange est ainsi fondu(e) pour réaliser un dépôt homogène et dense sur la surface elle aussi fusionnée. Typiquement, ces dépôts ou empilements successifs sont protégés tout au long de la construction par un gaz neutre pour parer aux problèmes d'oxydation. Cette technique permet de réaliser de larges dépôts de l'ordre de 4 à 5 mm et des dépôts plus fins (500 µm de large). Il n'y a pas de contact entre la buse de fabrication rapide et le substrat, donc pas d'usure.

Ci-après on va présenter une situation où, comme illustré, la buse 1 projette suivant une direction de dépôt de couches, ici (sensiblement) verticalement, suivant un axe Z, la poudre métallique 3 vers le substrat, dans le but de construire en hauteur la (partie de) pièce attendue.

Ainsi, le faisceau laser 13 est émis vers le substrat suivant cet axe Z, et, dans ce cas, les distances de référence théorique et réelle précitées vont être mesurées parallèlement à cet axe ou suivant un angle A (figure 4) ayant une projection 13a parallèle à l'axe Z.

Dans l'exemple préféré illustré, la buse 1 comprend deux cônes concentriques, 16a,16b coaxiaux à l'axe Z.

Issue d'une source laser 17, et si nécessaire via un miroir 19, le faisceau laser 13 est émis verticalement vers le substrat 5, au centre du cône central 16a.

Le mélange 3 des poudres métalliques 3a,3b circule dans le cône extérieur 16b vers l'extérieur duquel il est projeté, vers le bas, en direction du substrat 5, via un gaz porteur 21b. Un autre gaz 21a entoure le faisceau 13 dans le cône intérieur 16a.

Des irrégularités de dépôt de la matière issue du mélange 3, sous l'effet du faisceau laser 13, peuvent survenir. Par exemple, notamment si un décentrage survient entre les deux cônes, il peut avoir y avoir plus de matière à projeter d'un côté que de l'autre.

Les poudres métalliques peuvent être des alliages de titane (TA6V, Ti71, 6242,...), des alliages base nickel et cobalt (Inco718, Hastelloy X, René77, René125, HA188) et des aciers (Z12CNDV12, 17-4PH).

Sur le substrat 5, les dépôts successifs des couches 11₁,11₂,11₃... 11ᵢ...de matière vont ainsi s'empiler les unes sur les autres, jusqu'à réaliser la pièce 7 attendue.

Le schéma synoptique de la figure 5, qui synthétise les principales étapes de fabrication de cette pièce, dans le contexte d'un mode de réalisation préféré de l'invention, indique que le programme de commande de la buse, et plus généralement de la machine de dépôt 2, a été défini avec les étapes successives suivantes :
- étape 27 : initialement, avant le début de réalisation de la pièce, mesure (en 27a avec l'autofocus 45 ; voir ci-après) et calcul (en 27b) avec enregistrement en mémoire 29 d'une distance D0 de référence théorique entre la surface du substrat 5 et un emplacement 1a de la buse, mobile avec elle, ici suivant l'axe Z. Un étalonnage avec corrélation initiale de l'autofocus de la caméra par rapport à la pièce à construire (ou à recharger dans le cas d'une réparation) sera gage de précision et de qualité ;
- étape 31 : définition et mise en mémoire 29 d'une trajectoire prédéterminée de la buse 1, adaptée à la fabrication de la pièce, à faire suivre à la buse initialement et au moins en début de réalisation de la pièce ;

Les étapes suivantes se déroulent ensuite successivement dans l'ordre, pendant la réalisation de la pièce :
- étape 33 : alors que la buse s'est déplacée suivant sa trajectoire prédéterminée, pilotée en cela par le programme de commande 34, mesure (en 33a avec l'autofocus 45) et calcul (en 33b) avec mise en mémoire 29 d'une distance réelle Di (i=1,2..n) entre l'emplacement 1a de la buse et la surface libre 35i (i=1,2..n) de la couche 11ᵢ, cette couche (la dernière couche s'il y en a eu déjà plusieurs de déposé sur le substrat, comme illustré figure 5),
- étape 37 : comparaison entre la distance de référence théorique D0 et la distance réelle Di, en référence à un seuil d'écart prédéterminé entre ces distances (D0 - Di);

Deux possibilités alors :
- étape 42 : si le seuil d'écart est atteint (voire dépassé), on modifie la trajectoire de la buse (avec enregistrement en mémoire 29), ou
- étape 44 : si le seuil d'écart n'est pas atteint, il y a maintien de la trajectoire prédéterminée de la buse.

Entretemps, une étape de test en 39 ou 41, respectivement, a été conduite, avec de nouveau deux possibilités:
- soit l'étape de fabrication n'est pas la dernière (c'est-à-dire que le dépôt concerné n'est pas celui de la dernière couche 11ᵢ) et alors l'étape précitée 42 ou 44 intervient,
- soit le dépôt concerné est celui de la dernière couche 11ᵢ (sur la base du nombre initialement défini ou du nombre modifié, dans le cas du choix préféré présenté ci-après), et alors le processus de fabrication se termine à l'étape 46 ou 48, suivant le cas.

Si l'étape 42 ou 44 a été atteinte, c'est donc qu'au moins une étape de dépôt est encore à réaliser, et il y a retour alors bouclage, dans les deux cas, par l'une des lignes 50, à nouveau sur l'étape 33, pour reproduire un certain nombre de fois les étapes 33 à 39 ou 41, et ainsi recaler si nécessaire périodiquement le programme 34 de fabrication, en adaptant en temps réel la trajectoire de la buse avec, à chaque étape 33, mesure d'une distance réelle Di.

Concernant cette modification de la trajectoire à l'étape 42, il a été ici préféré intervenir sur les étapes de réalisation des couches, et en particulier sur le nombre de couches encore à déposer.

Précisément, on a compris de ce qui précède que la réalisation de la pièce 7 s'obtient en éloignant par étapes successives la buse 1 vis-à-vis du substrat 5 et, dès qu'une couche est déposée, de la couche précédente 11ⱼ de matière déposée, au fur et à mesure que les couches s'empilent.

Ainsi, la définition et la mise en mémoire 29, à l'étape 31, de la trajectoire prédéterminée de la buse 1 auront de préférence incluses celles d'un nombre prédéterminé de telles étapes de dépôts.

Et c'est en modifiant ce nombre prédéterminé d'étapes que l'on va pouvoir modifier la trajectoire de la buse 1.

En pratique, il est conseillé qu'à une étape donnée de dépôt corresponde la réalisation d'une des couches 11ᵢ précitées.

Ainsi :
- à l'étape 31, lors donc de la définition et de l'enregistrement en mémoire 29, dans le programme 34 de pilotage lié, de cette trajectoire prédéterminée de la buse 1, correspondra alors un nombre prédéterminé de couches 11₁... 11ᵢ à déposer,
- puis si l'étape 42 est atteinte, à la trajectoire modifiée de la buse dans ce programme, correspondra un nombre modifié de telles couches encore à déposer.

Dans ce dernier cas, sera alors modifiée en mémoire 29 la trajectoire de la buse en substituant audit nombre prédéterminé de couches à déposer le nombre nc modifié de couches 11₁...11ᵢ encore à déposer, nc étant un entier positif ou négatif.

A ce sujet, le seuil précité (D0 - Di) orientant vers l'étape 39 ou 41 sera favorablement égal à l'épaisseur d'une couche 11ᵢ, soit typiquement 0.1mm.

Ainsi si la distance Di est plus courte que D0 de plus de 0.1mm, par exemple 0.2mm, le programme ajoutera deux étapes de dépôts, soit deux couches. Il en supprimera par contre trois si le relevé et le calcul indiquent une distance Di de +0.3mm par rapport à D0. Et il n'y aura aucune modification d'étape si le relevé et le calcul indiquent une distance Di moins (ou plus) longue de moins de 0.1mm par rapport à D0.

Comme déjà mentionné, dans l'exemple illustré, c'est donc suivant la hauteur de la pièce 7, donc (en particulier) suivant l'axe Z (ou sensiblement parallèlement à lui) :
- qu'initialement la définition de la trajectoire prédéterminée de la buse 1 a été en particulier réalisée,
- que les distances de référence théorique D0 et réelle D1,D2...Di sont mesurées,
- et qu'il est prévu de modifier la trajectoire de la buse.

En pratique, il est conseillé de réaliser le/chaque « saut » précité dans le programme de rechargement à la coordonnée en Z mesurée (D1 ...Di) pour des valeurs de X et Y proches de celles où se trouve la buse 1 au moment où le recalage de sa trajectoire intervient. Un sous-programme de reprise pourra alors être utilisé par ailleurs pour gérer en conséquence la puissance du laser et/ou la vitesse de rechargement.

Dans cette situation de fabrication contrôlée suivant l'axe Z, il est aussi conseillé que la réalisation prévue de la pièce 7 s'opère par dépôts successifs les uns sur les autres de couches 35a,...35i toutes d'une même épaisseur e, en éloignant donc à chaque couche la buse vis-à-vis du substrat, ici suivant l'axe Z.

Ceci simplifiera le contrôle de la bonne évolution en hauteur de la pièce et évitera de créer par ailleurs d'autres irrégularités de surface (dents de scie précitées).

Cette recherche d'un contrôle relativement simple du respect des contraintes dimensionnelles de la pièce passera aussi de préférence par une limitation des mesures D1 ...Di et/ou des modifications de trajectoire de la buse.

Ainsi est-il conseillé que, pendant la réalisation de la pièce, ce ne soit qu'après le dépôt de plusieurs couches 11ᵢ que la distance réelle Di soit mesurée et la trajectoire modifiée, si ledit écart est atteint.

A ce sujet, on pourra en particulier prévoir d'effectuer plusieurs mesures successives de ladite distance réelle et (si donc ledit écart est atteint) de ne modifier la trajectoire de la buse 1 qu'après le dépôt de plusieurs couches par rapport à la mesure précédente.

Sur les figures 2-4, on aura remarqué que les moyens schématisés de mesure des distances de référence théorique D0 et réelles D1...Di comprennent un appareil photographique (caméra de mesure 15) disposant d'un système 45 de mise au point automatique (autofocus).

C'est donc de préférence par cet autofocus, on que l'on va pouvoir calculer et enregistrer tant la distance initiale D0 (quand aucune couche n'a encore été déposée) que les positions réelles du système optique 15a de l'objectif photographique de la caméra 15 (zone 1a précitée), en visant alors la surface 35i de la dernière couche 11ᵢ déposée. Une fois l'image nette grâce à l'autofocus la position de la buse par rapport à la pièce pourra donc être déduite.

Les visées assureront des mesures parallèlement au faisceau laser 13 dirigé vers le substrat, en l'espèce suivant donc l'axe Z (ou sensiblement parallèlement à lui).

En référence aux explications qui précèdent, le fonctionnement du dispositif en liaison avec ces mesures de distances sera donc comme suit :
A l'instant initial, comme sur la figure 2, l'extrémité inférieure libre 10 de la buse 1 (pointe des cônes concentriques, 15a,15b coaxiaux à l'axe Z) est positionnée à la distance Dc dite de rechargement (qui est donc la distance optimale entre cette extrémité 10 et, initialement, la surface libre 5a du substrat puis celle 35ᵢ de la couche de matière 11ᵢ déposée).

On aura compris que de préférence on va conserver cette distance Dc de rechargement à chaque étape de la fabrication de la pièce, la buse s'éloignant de l'épaisseur e d'une couche, à chaque couche 11ᵢ déposée.

De fait, il est conseillé que, dès lors qu'à la distance de référence théorique D0 correspond cette distance déterminée Dc entre le substrat et une extrémité de la buse faisant face au substrat, cette distance Dc soit maintenue pendant la réalisation de la pièce, de préférence au début du dépôt de chaque couche.

Buse calée à la distance Dc, une image nette de la surface libre 5a du substrat 5 prise par la caméra à cet instant initial, via l'autofocus 45 réglé en conséquence, va donc définir la distance D0 de référence théorique. Une calibration de l'autofocus 45 est de préférence alors effectuée.

Ensuite, c'est toujours avec la buse placée a priori de manière à respecter la distance Dc de rechargement que, via l'autofocus 45 réglé en conséquence et comme montré figure 3, les distances réelles D1,D2...Di vont être, comme déjà expliqué, successivement mesurées en cours de fabrication de la pièce.

Sur la figure 4, on a plus particulièrement fait figurer les positions relatives des moyens de mesure des distance D0,D1...Di...(axe optique Z0 de la caméra 15 de mesure à autofocus) et de la buse 1 au centre de laquelle passe le faisceau laser 13 (ici axe Z).

Pour éviter que la caméra vise le bain de fusion, dans l'axe Z, ce qui peut rendre imprécise la mise au point de l'autofocus en particulier quand la surface recevant le faisceau laser est en fusion, l'axe Z0 est ici décalé latéralement (distance e1).

En liaison avec cela, deux manières d'opérer sont proposées :
- soit l'axe optique est maintenu vertical ; voir lentille 15a ; axe vertical Z0;
- soit on utilise la caméra 150 (identique à celle précitée 15) en l'inclinant d'un angle A ayant une projection 13a parallèle à l'axe Z.

Sur la figure 6, on notera encore que la pièce 7 ainsi fabriquée pourra être l'une des pales d'une rangée annulaire d'aubes ou pales 47 sensiblement radiales d'un disque 49 de turbomachine aéronautique qui peuvent être d'une seule pièce (monoblocs) avec le disque. Les aubes 12 sont reliées par leurs extrémités radialement internes à une plate-forme annulaire 51 qui s'étend à la périphérie externe du disque.

Outre qu'elle aura pu être fabriquée selon la technique décrite ci-avant, la pale 7 aurait aussi pu être ainsi réparée, en cas de détérioration. La référence 53 désigne d'ailleurs un plan de coupe de cette aube destinée à être remplacée. La surface libre d'extrémité du tronçon 7a de pale encore en place définirait alors la surface 5a précitée du substrat 5.

## Revendications

1. Procédé de fabrication ou de réparation d'une pièce de turbomachine par l'intermédiaire d'un faisceau laser (13), dans lequel procédé une buse (1) projette une poudre métallique (3) vers un substrat (5) de sorte à réaliser la pièce (7) par dépôts successifs les uns sur les autres, suivant une direction, de couches (11i), en faisant pour cela suivre à la buse une trajectoire, **caractérisé en ce que** l'on met en œuvre une machine de dépôt programmée de manière à effectuer les étapes suivantes:
- initialement la trajectoire de la buse est définie de façon prédéterminée, ce qui inclut une définition de ladite trajectoire suivant un axe Z qui correspond à ladite direction de dépôt des couches (11i) et à une hauteur de la pièce (7), puis,
- pendant la réalisation de la pièce :
-- suivant une parallèle à la direction de dépôt des couches (11i), on compare une distance de référence théorique (D0) précédemment enregistrée et une distance réelle (Di) qui est alors mesurée suivant ledit axe Z, et
-- à partir d'un seuil d'écart non nul entre la distance de référence théorique et la distance réelle mesurée, on modifie la trajectoire de la buse, suivant l'axe Z.

2. Procédé selon la revendication 1, où :
- on réalise la pièce (7) en éloignant par étapes la buse vis-à-vis du substrat (5), suivant ladite direction de dépôt des couches (11i),
- la trajectoire prédéterminée de la buse (1) inclut un nombre prédéterminé de telles étapes,
- et on modifie la trajectoire de la buse en modifiant ledit nombre prédéterminé d'étapes.

3. Procédé selon la revendication 1 ou 2, où :
- à la trajectoire prédéterminée de la buse (1) correspond un nombre prédéterminé de dites couches (11i) à déposer,
- à la trajectoire modifiée de la buse correspond un nombre modifié de dites couches encore à déposer,
- et on modifie la trajectoire de la buse en substituant audit nombre prédéterminé de couches à déposer le nombre modifié de couches encore à déposer.

4. Procédé selon l'une quelconque des revendications 1 à 3, où on réalise la pièce (7) par dépôts successifs les uns sur les autres de couches (11i) d'une même épaisseur, en éloignant à chaque couche la buse vis-à-vis du substrat (5), suivant ladite direction de dépôt des couches (11i).

5. Procédé selon l'une quelconque des revendications précédentes où, pendant la réalisation de la pièce, ce n'est qu'après le dépôt de plusieurs couches (11i) que ladite distance réelle est mesurée et/ou la trajectoire modifiée, si ledit écart est atteint.

6. Procédé selon l'une quelconque des revendications précédente où ledit seuil d'écart entre la distance de référence théorique (D0) et la distance réelle mesurée (D1,Di) est égal à l'épaisseur (e) d'une couche.

7. Procédé selon l'une quelconque des revendications précédentes, où on utilise un appareil photographique (15) disposant d'un système (45) de mise au point automatique pour obtenir la distance de référence théorique et la distance réelle.

8. Procédé selon l'une quelconque des revendications précédentes, où :
- le faisceau laser (13) est émis suivant ledit axe Z,
- et les distances de référence théorique (D0) et réelle (Di) sont mesurées à l'écart dudit axe Z, parallèlement à cet axe ou suivant un angle (A) ayant une projection (13a) parallèle audit axe Z.

9. Procédé selon l'une quelconque des revendications précédentes où, à la distance de référence théorique (D0) correspond, suivant ladite direction de dépôt des couches (11i), une distance déterminée (Dc) entre le substrat (5) et une extrémité (10) de la buse (1) faisant face audit substrat, et cette distance déterminée est maintenue pendant la réalisation de la pièce, au début ou à la fin du dépôt de chaque couche (11i).

## Patentansprüche

1. Verfahren zur Herstellung oder Reparatur eines Bauteils einer Turbomaschine bzw. eines Turbotriebwerks mit Hilfe eines Laserstrahls (13), wobei bei dem Verfahren eine Düse (1) ein Metallpulver (3) auf ein Substrat (5) derart aufspritzt, dass das Bauteil (7) durch aufeinanderfolgende Abscheidungen von Schichten (11i) übereinander in einer Richtung hergestellt wird, indem dazu der Düse eine Bahn nachgeführt wird, **dadurch gekennzeichnet, dass** eine programmierte Abscheidemaschine ist umzusetzen, um die folgenden Schritte auszuführen :
- zunächst die Bahn der Düse in vorgegebener Weise definiert wird, was das Definieren der Bahn entlang einer Z-Achse, die der Richtung der Abscheidung von Schichten (11i) und einer Höhe des Bauteils (7) entspricht, umfasst, dann
- während der Herstellung des Bauteils:
-- entlang einer Parallelen zur Richtung der Abscheidung der Schichten (11i) ein zuvor aufgezeichneter theoretischer Referenzabstand (D0) mit einem tatsächlichen Abstand (Di) verglichen wird, der dann entlang der Z-Achse gemessen wird, und
-- ausgehend von einem Abweichungsschwellenwert ungleich Null zwischen dem theoretischen Referenzabstand und dem tatsächlich gemessenen Abstand die Bahn der Düse entlang der Z-Achse geändert wird.

2. Verfahren nach Anspruch 1,
wobei:
- das Bauteil (7) durch schrittweises Bewegen der Düse vom Substrat (5) weg in der Richtung der Abscheidung der Schichten (11i) hergestellt wird,
- die vorgegebene Bahn der Düse (1) eine vorgegebene Anzahl solcher Schritte umfasst,
- und die Bahn der Düse durch Änderung der vorgegebenen Anzahl von Schritten geändert wird.

3. Verfahren nach Anspruch 1 oder 2,
wobei:
- die vorgegebene Bahn der Düse (1) einer vorgegebenen Anzahl der abzuscheidenden Schichten (11i) entspricht,
- der geänderten Bahn der Düse eine geänderte Anzahl der noch abzuscheidenden Schichten entspricht,
- und die Bahn der Düse geändert wird, indem die vorgegebene Anzahl der abzuscheidenden Schichten durch die geänderte Anzahl der noch abzuscheidenden Schichten ersetzt wird.

4. Verfahren nach einem der Ansprüche 1 bis 3,
wobei
das Bauteil (7) durch aufeinanderfolgende Abscheidungen von Schichten (11i) gleicher Dicke übereinander hergestellt wird, indem die Düse bei jeder Schicht in der Richtung der Abscheidung der Schichten (11i) vom Substrat (5) wegbewegt wird.

5. Verfahren nach einem der vorangehenden Ansprüche,
wobei
während der Herstellung des Bauteils erst nach dem Abscheiden mehrerer Schichten (11i) der tatsächliche Abstand gemessen und/oder die Bahn verändert wird, wenn die Abweichung erreicht ist.

6. Verfahren nach einem der vorangehenden Ansprüche,
wobei
der Abweichungsschwellenwert zwischen dem theoretischen Referenzabstand (D0) und dem tatsächlich gemessenen Abstand (D1, Di) gleich der Dicke (e) einer Schicht ist.

7. Verfahren nach einem der vorangehenden Ansprüche,
wobei
eine Kamera (15) mit einem automatischen Fokussiersystem (45) zum Erhalten des theoretischen Referenzabstands und des tatsächlichen Abstands verwendet wird.

8. Verfahren nach einem der vorangehenden Ansprüche,
wobei:
- der Laserstrahl (13) entlang der Z-Achse emittiert wird,
- und der theoretische Referenzabstand (D0) und der tatsächliche Abstand (Di) in Entfernung von der Z-Achse, parallel zu dieser Achse oder in einem Winkel (A) mit einer Projektion (13a) parallel zur Z-Achse gemessen werden.

9. Verfahren nach einem der vorangehenden Ansprüche,
wobei
dem theoretischen Referenzabstand (D0) in der Richtung der Abscheidung der Schichten (11i) ein bestimmter Abstand (Dc) zwischen dem Substrat (5) und einem Ende (10) der Düse (1), das dem Substrat zugewandt ist, entspricht und dieser bestimmte Abstand während der Herstellung des Bauteils, zu Beginn oder am Ende der Abscheidung jeder Schicht (11i), eingehalten wird.

## Claims

1. A method for producing or repairing a turbomachine part by means of a laser beam (13), wherein a nozzle (1) sprays a metal powder (3) towards a substrate (5), so as to produce the part (7) by successive depositions of layers (11i) on top of each other, in one direction, therefore making the nozzle follow a trajectory, **characterized in that** a programmed deposition machine is operated, so that the following steps are performed:
- the trajectory of the nozzle is initially defined in a pre-determined manner, which includes a definition of said trajectory along a Z axis corresponding to said direction of deposition of the layers (11i) and a height of the part (7), and then
- during the production of the part:
-- referring to an orientation parallel to the direction of deposition of the layers (11 i), a theoretical reference distance (D0) that has been previously recorded and a real distance (Di) which is then measured are compared, and
-- the trajectory of the nozzle is modified along said Z axis on the basis of a non null deviation threshold between the theoretical reference distance and the measured real distance.

2. A method according to claim 1, wherein:
- the part (7) is produced while stepwise moving the nozzle away from the substrate (5), in said direction of deposition of the layers (11i),
- the predetermined trajectory of the nozzle (1) includes a predetermined number of such steps,
- and the trajectory of the nozzle is modified by changing said predetermined number of steps.

3. A method according to any one of claims 1 or 2, wherein:
- a predetermined number of said layers (11 i) to be deposited corresponds to the predetermined trajectory of the nozzle (1),
- a modified number of said layers still to be deposited corresponds to the modified trajectory of the nozzle,
- and the trajectory of the nozzle is modified by substituting the modified number of layers still to be deposited with said predetermined number of layers to be deposited.

4. A method according to any one of claims 1 to 3, wherein the part is produced (7) by successive depositions on top of each other of layers (11 i) having a same thickness, by moving the nozzle away from the substrate (5), for each layer, in said direction of deposition of the layers (11i).

5. A method according to any one of the preceding claims, wherein during the production of the part, said real distance is measured and/or the trajectory modified only after the deposition of several layers (11i), if said deviation is reached.

6. A method according to any one of the preceding claims, wherein said deviation threshold between the theoretical reference distance (D0) and the measured real distance (D1, Di) is equal to the thickness (e) of a layer.

7. A method according to any one of the preceding claims, wherein a camera (15) with an autofocus system (45) is used to obtain the theoretical reference distance and the real distance.

8. A method according to any one of the preceding claims, wherein:
- the laser beam (13) is emitted along said Z axis,
- and the theoretical reference (D0) and real (Di) distances are measured away from said Z axis, parallel to this axis or at an angle (A) having a projection (13a) parallel to said Z axis.

9. A method according to any one of the preceding claims, wherein a determined distance (Dc), between the substrate (5) and one end (10) of the nozzle (1) facing said substrate, corresponds to the theoretical reference distance (D0), in said direction of deposition of the layers (11i), and said determined distance is maintained during the production of the part, at the beginning or the end of the deposition of each layer (11i).
